# EUROPÄISCHE PATENTSCHRIFT

(11) **EP 3 385 119 B1**
(45) Veröffentlichungstag und Bekanntmachung des Hinweises auf die Patenterteilung: **15.04.2020**
(21) Anmeldenummer: 18165940.0
(22) Anmeldetag: 05.04.2018
(51) Int. Cl.: B60P 3/00, B60P 3/42

(54) **MEHRFUNKTIONS-TRANSPORTFAHRZEUG MIT KLAPPBAREM TRANSPORTGESTELL**
MULTI-FUNCTION TRANSPORT WITH FOLDABLE TRANSPORT RACK
VÉHICULE DE TRANSPORT MULTIFONCTION POURVU DE CHÂSSIS DE TRANSPORT RABATTABLE

(30) Priorität: 07.04.2017 DE 202017102079 U
(43) Veröffentlichungstag der Anmeldung: 10.10.2018
(73) Patentinhaber: Langendorf GmbH, 45731 Waltrop (DE); HEGLA GmbH & Co. KG, 37688 Beverungen (DE)
(72) Erfinder: BRUNNEMANN, Michael, 45731 Waltrop (DE); BOCKELMANN, Ralf, 27801 Dötlingen (DE); JOST, Martin, 37688 Beverungen (DE); HÖTGER, Bernhard, 37697 Lauenförde (DE)
(74) Vertreter: Dr. Träger & Strautmann PAe PartG mbB

(56) Entgegenhaltungen:
- EP-A1- 1 745 980
- DE-U1-202008 012 470
- FR-A1- 3 013 339
- US-A- 5 209 540
- US-B1- 7 942 295

## Beschreibung

Gegenstand der Erfindung ist ein als Innenlader ausgebildeter Sattelauflieger mit den im Oberbegriff des Anspruchs 1 genannten Merkmalen. Der Innenlader ist eine spezielle Form des Sattelaufliegers. Diese Sattelauflieger haben keine durchgehenden Achsen zwischen den Rädern, sondern eine besondere Form der Einzelradaufhängung, die sogenannten Einzelradschwingen. Für diese Einzelradaufhängung ist ein spezielles, U-förmiges, Fahrgestell erforderlich, das in etwa die Form einer Stimmgabel aufweist.

Benötigt werden die Innenlader für den Transport großer plattenförmiger Elemente, insbesondere großer Glasscheiben. Diese Glasscheiben haben eine Höhe von bis zu 3.600 mm. Da diese Glasscheiben stehend transportiert werden, würden sie auf konventionellen Sattelaufliegern die maximale Innenhöhe von ca. 3.000 mm überschreiten.

Der Transport der plattenförmigen Elemente erfolgt, indem diese zunächst auf ein separates, jedoch an den Fahrzeugrahmen des Innenladers koppelbares, Transportgestell verladen werden. Dieses Transportgestell umfasst einen Transportboden und eine Aufnahmevorrichtung für die Ladung. Die Aufnahmevorrichtung umfasst wenigstens zwei Ständer, die wiederum jeweils ein Basisteil, ein Oberteil sowie ein dazwischen angeordneten Scharnier umfassen. Die Ständer sind klappbar und bilden in Arbeitsposition gemeinsam eine Anlageebene für die Ladung. Mittels der Scharniere kann das Oberteil gegenüber dem Basisteil aus der Arbeitsposition in eine Ruheposition geschwenkt werden, so dass die Aufnahmevorrichtung insgesamt in einem unterhalb der Ladefläche angeordneten Laderaum aufnehmbar ist.

Ein gattungsgemässer Innenlader ist aus FR 3013339 A1 bekannt.

Ein weiterer Innenlader ist aus DE 20 2008 012 470 U1 bekannt. Der bekannte Innenlader ist sowohl zum Transport von sperrige Ladungen, wie aufrecht stehenden Papierrollen, Betonteilen oder Glasscheiben, als auch zum Transport von Paletten geeignet und somit multifunktional einsetzbar. Der Innenlader ist mit einem unteren Transportboden ausgerüstet sowie einem darauf angebrachten, in Fahrtrichtung klappbarem, Transportgestell, an dem die Ladung befestigt ist.

Weiterhin weist dieser Innenlader einer oberhalb des Transportbodens angeordnete Schwenkplatte auf, welche zwischen einer vertikalen und horizontalen Lage schwenkbar ist und in horizontaler Lage eine Ladefläche für Paletten bilden kann. Bei in senkrechter Position ausgerichteter Schwenkplatte können auf den unteren Transportboden sperrige Ladungen gestellt und transportiert werden. Nach Abschluss eines Sperrgut-Transports und nach dem Entladen des sperrigen Transportguts kann die Schwenkplatte bei Bedarf in horizontale Lage geschwenkt werden, so dass die so gebildete Ladefläche mit Paletten beladbar ist.

Bei diesem Innenlader stützt der Transportboden sich mit seinen Längsrändern an den flacheisenartigen, nach innen weisenden Aufnahmeschienen des Fahrzeugrahmens ab. Um die sperrige Ladung bei hochgeschwenktem Transportboden zu halten ist der Transportboden mit zusätzlichen Sicherungselementen ausgerüstet. Der Transportboden mit den Sicherungselementen ist an die Ladung anpressbar und hält diese beim Transport.

Nachteilig an diesem Transportgestell ist, dass wegen der quer zur Längsrichtung des Transportgestells angeordneten Drehachse der Scharniere die eingeklappten Oberteile der Ständer teilweise aufeinander liegen und sich miteinander verkeilen können. Aufgabe der Erfindung ist es, einen Innenlader mit einem Transportgestell ohne die genannten Nachteile vorzuschlagen.

Diese Aufgabe wird durch einen Innenlader mit den im kennzeichnenden Teil des Anspruchs 1 beschrieben Merkmalen gelöst.

Soweit die Scharniere in Schrägrichtung an den Ständern angeordnet sind, ist die Drehachse dementsprechend ebenfalls schräg ausgerichtet und die Oberteile werden in Schrägrichtung eingeklappt. Hierdurch können etwaige Profilkonturen der Ständer-Oberteile sich selbst dann nicht verhaken, wenn sie einander im eingeklappten Zustand kontaktieren. Besonders bevorzugt ist allerdings die Wahl einer Schrägstellung beziehungsweise eine entsprechende Winkelstellung des Scharniers gegenüber dem Ständer, die so groß ist, dass die Ständer-Oberteile im eingeklappten Zustand berührungsfrei nebeneinander liegen.

In einer bevorzugten Ausführungsform kontaktieren die Ständer im in Ruheposition eingeklappten Zustand die Unterseite den Schwenkbodens unmittelbar oder indirekt über ein zwischen Schwenkboden und Ständer vorgesehenes Kontaktelement. Die eingeklappten Ständer bilden so eine Lagerung für den Schwenkboden aus. Vorteilhaft hieran ist, dass der Schwenkboden eine zusätzliche Abstützung erhält und dementsprechend leichter konstruiert werden kann. Hierdurch kann Eigengewicht eingespart und die Nutzlast erhöht werden.

Die Lagerung des Schwenkbodens kann ein Dämpfungselement umfassen, welches bei in Ruheposition eingeklapptem Ständer zwischen Schwenkboden und Ständer angeordnet ist, so dass bei Transportfahrten entstehende stoßartige Lastspitzen abgefedert werden. Das Dämpfungselement stellt somit ein Kontaktelement dar, gegen das sich der Ständer von der Unterseite her abstützt und auf dessen Oberseite der Schwenkboden lagert. Das Dämpfungselement kann aus einem elastischen Material, beispielsweis aus einem Kunststoff, hergestellt sein. Es kann aber auch eine Feder, insbesondere aus Federstahl-Material, oder ein Hydro-pneumatischer Speicher vorgesehen sein. Vorzugsweise ist das Kontaktelement hinsichtlich seiner Bauhöhe einstellbar, so dass es individuell an den Abstand zwischen Unterseite Schwenkboden und dem Auflagepunkt oder -Bereich des eingeklappten Ständers anpassbar ist.

Um den Bauraum der eingeklappten Ständer und damit den Bauraum des Transportgestells insgesamt weiter zu reduzieren, kann das Oberteil des Ständers wenigstens zwei schwenkbare Segmente umfassen, die durch ein Scharnier verbunden sind. Jeder Ständer weist in diesem Fall insgesamt zwei oder mehr Scharniere auf, die ein mehrfaches Klappen ermöglichen.

Besonders bevorzugt ist weiterhin eine Ausführungsform, bei der am Ständer wenigstens ein Einstellelement vorgesehen ist, mittels dessen das Basisteil und das Oberteil des Ständers und/oder die Segmente zueinander ausrichtbar sind. Hierdurch ist die durch Basisteil und Oberteil und/oder durch die Segmente gebildete Anlagefläche für die Ladung planeben ausrichtbar. Durch den Arbeitseinsatz bedingte Verschleißerscheinungen, beispielsweise Ausschlagen der Scharniere, oder andere Umstände, die die zunächst planebene Anlagefläche für die Ladung beseitigt haben, können somit durch ein Nachjustieren mit dem Einstellmittel kompensiert werden.

Vorzugsweise weisen die Ständer Verriegelungselemente auf, mittels welcher die Position von Basisteil zu Oberteil und/oder die Position der Segmente des Oberteils zueinander fixierbar ist. Hierdurch erhöht sich einerseits die Arbeitssicherheit, da die Ständer nicht ungewollt zusammenklappen können. Andererseits reduziert sich der Verschleiß, da die durch ein Scharnier verbundenen Teile abgestützt werden und auch im Arbeitseinsatz, beispielsweise bei Transportfahrten über schlechte Straßen, nicht gegeneinander schlagen können.

Als Innenlader ausgebildeten Sattelauflieger weisen eine auf Basis straßenverkehrsrechtlicher Vorschriften definierte Maximallänge auf. Hierdurch ergibt sich auch ein definiertes Maximalmaß für die Länge des Transportgestells. Nicht immer werden jedoch Transportgestelle in Maximallänge benötigt. Es kann deshalb vorgesehen sein, dass der Innenlader an Stelle eines langen Transportgestells zwei oder mehr entsprechend kürzere Transportgestelle umfasst. Somit können die Transportgestelle an die Länge der Ladung angepasst werden.

Weiterhin ist es besonders bevorzugt, wenn das Transportgestell im in Ruheposition eingeklappten Zustand in Draufsicht gesehen die Außenkontur des Transportbodens nicht überragt. Hierdurch wird ein sehr platzsparendes Zusammenklappen ermöglicht und es kann sichergestellt werden, dass die Außenkontur eines in Ruheposition eingeklappten Transportgestells die Innenwände des Innenladers nicht berührt.

Das Transportgestell kann optional horizontale Anlagen zur zusätzlichen Befestigung der Ladung umfassen. Dies ist besonders dann von Vorteil, wenn die Ladung aus einem Paket relativ dünner Glasscheiben besteht, die durch die horizontalen Anlagen zusätzlich abgestützt und gegen Bruch gesichert werden.

Die Erfindung betrifft weiterhin ein Transportgestell für einen Innenlader umfassend einen Transportboden und wenigstens zwei Ständer mit jeweils einem Basisteil sowie einem mit dem Basisteil über ein Scharnier verbundenen Oberteil, wobei die Scharniere Schwenkachsen aufweisen, die so angeordnet sind, dass das Oberteil des Ständers gegenüber dem Basisteil in Schrägrichtung schwenkbar ist.

In bevorzugten Ausführungsformen weist dieses Transportgestell eines oder mehrere der weiter oben bereits im Zusammenhang mit dem Einsatz des Transportgestells in einem Innenlader beschriebenen Merkmale auf.

Weitere Merkmale, Einzelheiten und Vorteile der Erfindung ergeben sich aus der nachfolgenden Beschreibung der Ausführungsbeispiele, welches anhand der Zeichnung näher erläutert ist. Die Figuren zeigen:
- Fig. 1: einen Innenlader, bestückt mit Palettenladung, in einer perspektivischen Ansicht;
- Fig. 2: den Innenlader gemäß Fig. 1, in einer Seitenansicht;
- Fig. 3: den nicht beladenen Innenlader mit hochgeklapptem Schwenkboden, in einer Seitenansicht;
- Fig. 4: den Innenlader gemäß Fig. 3, beladen mit Glasscheiben, ebenso in einer Seitenansicht;
- Fig. 5: eine Heckansicht eines Innenladers mit in Querrichtung eingeklappten Transportgestell;
- Fig. 6: eine Heckansicht des Innenladers gemäß Fig. 5 mit aufgerichtetem Transportgestell und einer an das Transportgestell gekoppelten Ladung in Form von Glasscheiben;
- Fig. 7: eine Heckansicht des Innenladers gemäß Fig. 5 mit zusätzlicher Abstützung des Schwenkbodens;
- Fig. 8: ein Transportgestell in einer ersten Ausführungsform in einer perspektivischen Darstellung;
- Fig. 9: das Transportgestell gemäß Fig. 8 in einer ersten Seitenansicht;
- Fig. 10: das Transportgestell gemäß Fig. 8 in einer zweiten Seitenansicht;
- Fig. 11: zwei miteinander über ein Scharnier verbundene Segmente eines Ständers;
- Fig. 12: ein Detail der in Fig. 11 dargestellten Verbindungsstelle in einer Seitenansicht;
- Fig. 13: zwei miteinander über ein Scharnier verbundene Segmente eines Ständers mit einem zusätzlichen Verriegelungselement;
- Fig. 14: ein Detail der in Fig. 13 dargestellten Verbindungsstelle in einer Seitenansicht;
- Fig. 15: eine Heckansicht eines erfindungsgemäßen Innenladers mit in Schrägrichtung eingeklappten Transportgestell;
- Fig. 16: eine Heckansicht des Innenladers gemäß Fig. 15 mit aufgerichtetem Transportgestell;
- Fig. 17: eine Heckansicht des Innenladers gemäß Fig. 15 mit zusätzlicher Abstützung des Schwenkbodens;
- Fig. 18: ein Transportgestell in einer zweiten erfindungsgemäßen Ausführungsform mit in einer Schrägposition eingebauten Scharnieren in einer Seitenansicht;
- Fig. 19: das Transportgestell gemäß Fig. 18 mit schräg eingeklappten Ständern;
- Fig. 20: ein in einer Schrägposition eingebautes Scharnier eines Ständers;
- Fig. 21: ein Transportgestell mit in Schrägposition eingebauten Scharnieren in einer weiteren Seitenansicht.

Gleiche oder ähnliche Elemente können in den nachfolgenden Figuren mit gleichen oder ähnlichen Bezugszeichen versehen sein.

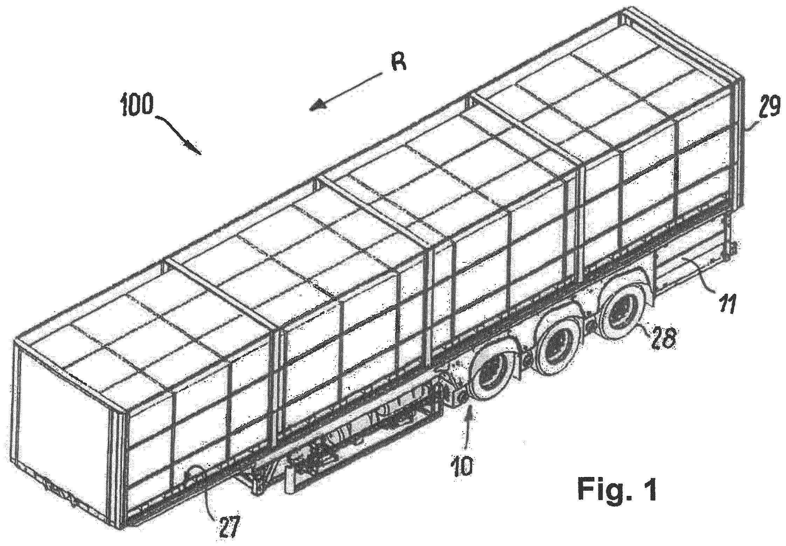

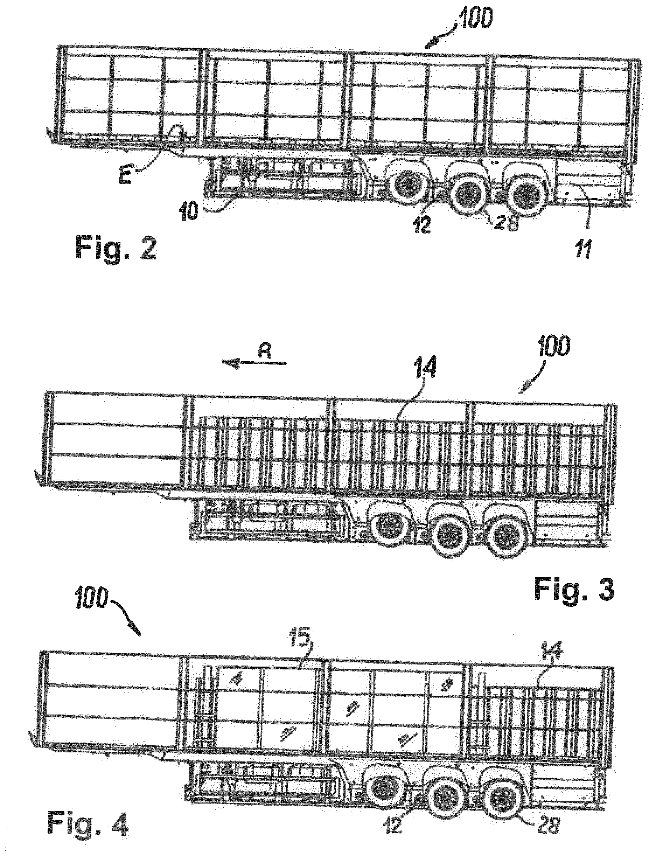

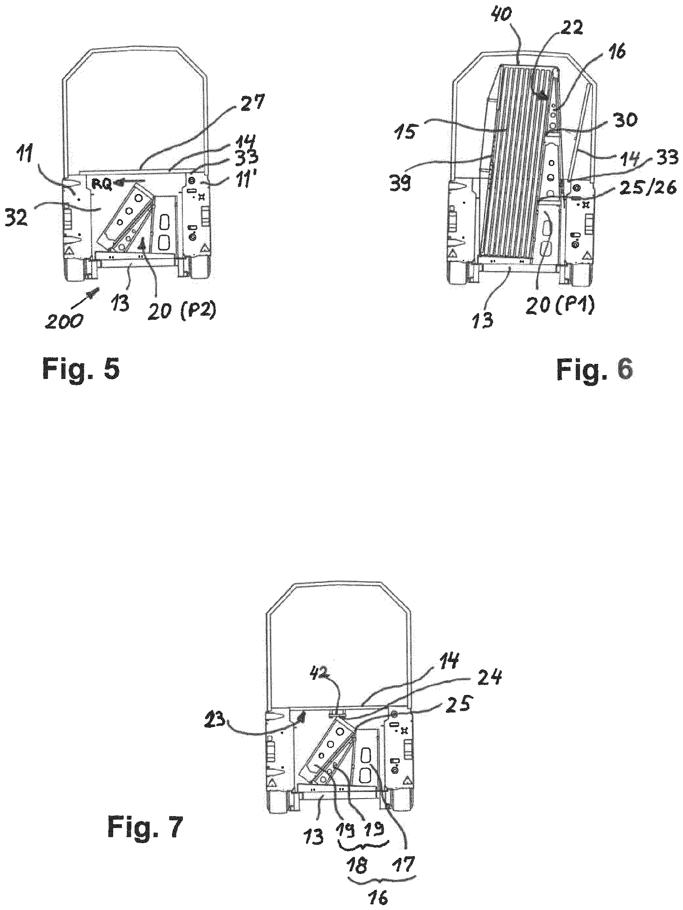

Die Figuren 1 und 2 zeigen einen als Sattelauflieger ausgebildeten, mit Paletten beladenen Innenlader 100 mit einem dreiachsigen Fahrzeugrahmen 10. Die Paletten mit Ladung ruhen auf einer sich über die ganze Fahrzeuglänge erstreckenden Ladefläche 27 mit horizontaler Ladeebene E, welche teilweise von einem abgesenkten Schwenkboden 14 (vgl. z.B. Fig. 5) ausgebildet ist. Im dargestellten Ausführungsbeispiel beinhaltet der Innenlader 100 neunundneunzig Paletten. In Abhängigkeit von der Palettengröße kann die Anzahl der Paletten selbstverständlich variieren. Die rückwärtige Seite des Innenladers 100 ist im Fahrbetrieb von einer Hecktür 29 (vgl. Fig. 1) verschlossen, die zugleich eine verriegelnde Funktion hat.

Der Fahrzeugrahmen 10 ist U-förmig und ähnelt somit einer Stimmgabel. Er umfasst zwei parallel zueinander angeordnete U-Schenkel 11, 11', an welchen insgesamt sechs Räder 28 in Einzelradschwingen 12 aufgehängt sind.

Die U-Schenkel 11, 11' des Fahrzeugrahmens 10 begrenzen einen offenen Ladungsschacht, in welchem ein Transportgestell 200; 300 mit einer schweren Ladung 15, beispielsweise einem aus Glasscheiben gebildeten Paket, untergebracht ist.

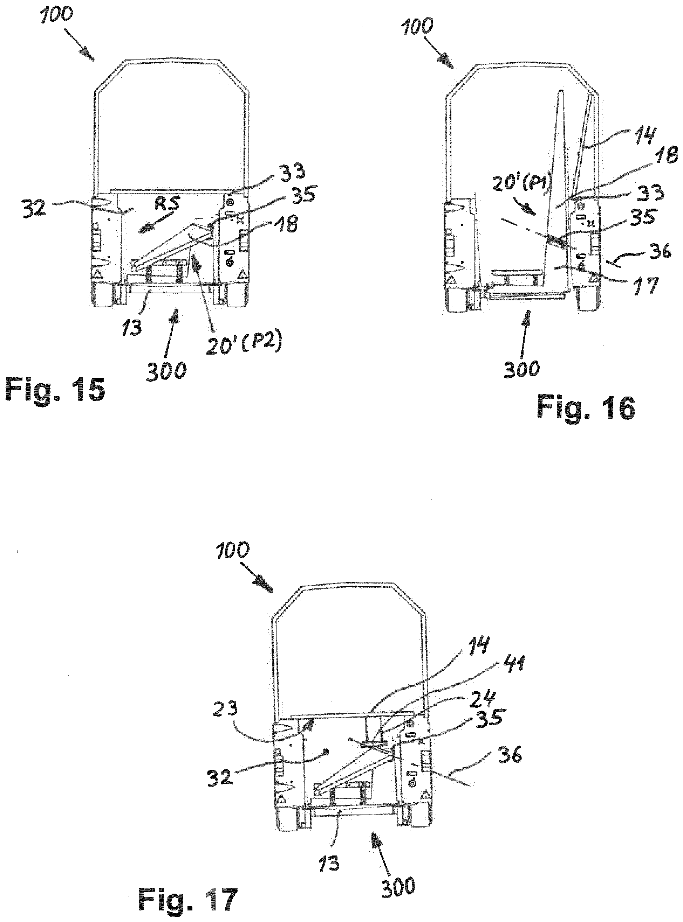

Um den Transportboden zu laden bzw. an den Innenlader zu koppeln wird das Fahrzeug nahezu bis zur Fahrbahn abgesenkt und rückwärts unter den Transportboden 13 gefahren. Nach Erreichen der endgültigen Ladeposition wird das Fahrzeug (Innenlader) mittels Luftfedern wieder in Fahrhöhe gehoben. Vorher wurde der Schwenkboden 14 um eine in Fig. 16 gezeigte Drehachse 33 in eine aufrecht stehende Position, wie in Fig. 6 bzw. 16 abgebildet, gebracht. Diese vertikale Lage des Schwenkbodens 14 ermöglicht den Transport von schwerer und sperriger Ladung 15 (vgl. Glaspaket in Figuren 4 und 6). Die sperrige Ladung wird zunächst auf den Transportboden 13 gestellt und dort gesichert. Transportboden 13 und Ladung 15 werden anschließend gemeinsam vom Innenlader 100 in einer dafür vorgesehenen Ladeposition aufgenommen.

In der besagten Ladeposition ist eine Anordnung Verriegelungsvorrichtungen vorgesehen, mittels derer der Transportboden 13 an den beiden U-Schenkeln 11, 11' des Fahrzeugrahmens 10 fest ankoppelbar ist
Da bruchempfindliche, sperrige Ladung 15, wie Glasscheiben, vorzugsweise nicht flachliegend transportiert wird, wird die Ladung 15 auf dem Transportboden 13 stehend, jedoch leicht geneigt (vgl. Fig. 6) im U-förmigen Ladungsschacht des Aufliegers 100 untergebracht. Die Ladung 15 stützt sich mit ihrer Flachseite an einer mit dem Transportboden 13 fest verbundenen Aufnahmevorrichtung 20; 20', beziehungsweise deren Anlageebene 22,ab.

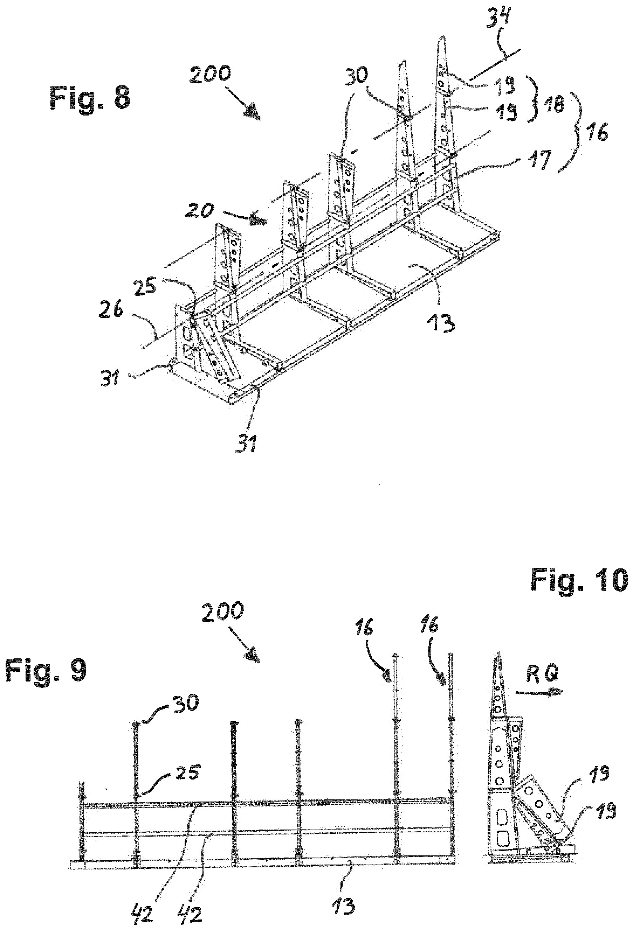

Die Figuren 5 bis 14 betreffen einen Innenlader 100 mit einem Transportgestell 200 bzw. das Transportgestell 200 selbst. Das Transportgestelle 200 umfasst einen Transportboden 13 sowie eine Aufnahmevorrichtung 20 Die Aufnahmevorrichtung 20 des Transportgestells 200 ist in Querrichtung RQ klappbar (vgl. insbesondere Fig. 10).

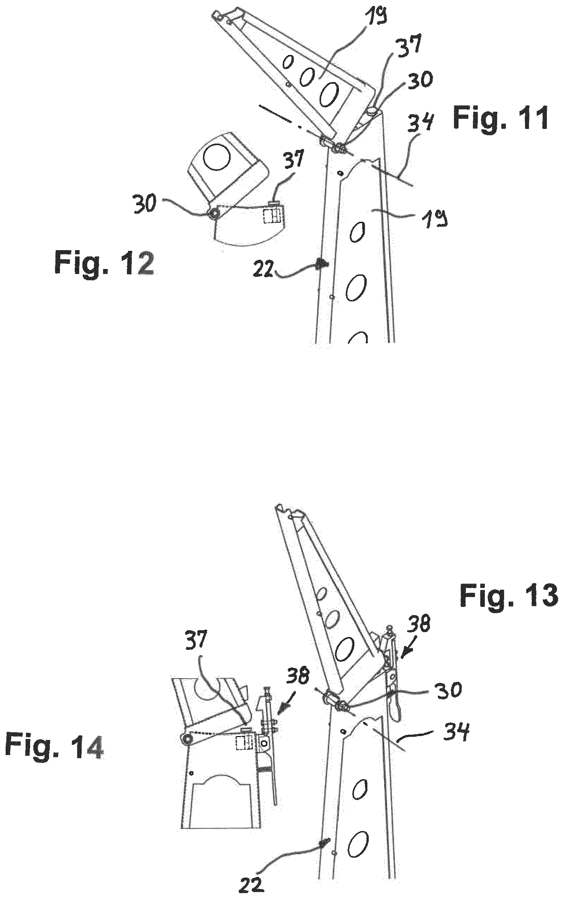

Die Aufnahmevorrichtung 20 umfasst einen so genannten L-Bock mit in Reihe angeordneten Ständern 16, welche eine Anlageebene 22 für die Ladung 15 bilden. Um Beschädigung an der Ladung, insbesondere an Glasscheiben, zu vermeiden sind die Anlageflächen für die Ladung 15 vorzugsweise mit einem elastischen Material, wie Hartgummi, belegt. Das in Fig. 11 dargestellte Glaspaket (Ladung 15) wird mit länglichen, voneinander beabstandeten Stützen 39 zusätzlich gesichert, welche mit zusätzlichen Zurrgurten 40 gehalten werden (vgl. Fig. 6).

Bei dem dargestellten Ausführungsbeispiel weist die Aufnahmevorrichtung 20 jeweils sechs ein- und aufklappbare Ständer 16. Die Ständer 16 verfügen jeweils über ein Scharnier 25, welches eine Schwenkachse 26 definiert und im dargestellten Ausführungsbeispiel in einem Abstand von 500 mm vom Transportboden 13 angeordnet ist. Das Scharnier 25 teilt den Ständer 16 in ein unteres, mit dem Transportboden 13 fest verbundenes, Basisteil 17 und ein oberes, sich verjüngendes, Oberteil 18. Im dargestellten Ausführungsbeispiel ist das Oberteil 18 in zwei Segmente 19 unterteilt, die durch ein Scharnier 30, welches eine Schwenkachse 34 definiert, miteinander verbunden sind.

Das Oberteil 18 der Ständer 16 ist somit aus einer im Wesentlichen senkrechten Arbeitsposition P1 (vgl. Fig. 6) in einer Richtung quer zum Transportgestell, die im Folgenden als Querrichtung QR bezeichnet wird, schwenkbar. Das weitere Scharnier 30 ermöglicht ebenfalls eine Schwenkbewegung in Querrichtung QR. Im Ergebnis sind die Ständer 16 somit mit einer doppelten Schwenkbewegung aus der Arbeitsposition P1 in die Ruheposition P2 (vgl. z.B. Fig. 5) einklappbar. Bei in Ruheposition P2 eingeklapptem Transportgestell 200 kann dieses vollständig in einem unterhalb des Schwenkbodens 14 befindlichem Laderaum 32 aufgenommen werden.

Fig. 5 zeigt weiterhin, dass die eingeklappte Aufnahmevorrichtung 20 den Transportboden 13 nicht überragt und deshalb problemlos im Laderaum 32 aufgenommen werden kann. Der Innenlader kann somit beispielsweise auf einer Auslieferungsfahrt sperrige, auf dem Transportgestell verzurrte Ladung, zu einem Zielort bringen, dort das Transportgestell einklappen, den Transportboden 14 in die waagerechte Position schwenken und für eine nachfolgende Rückfahrt auf dem Transportboden 14 Paletten laden.

Bei dem in Fig. 7 dargestellten Ausführungsbeispiel ist an der Unterseite 23 des Schwenkbodens 14 eine höheneinstellbare Lagerung 24 vorgesehen mit einer Lagerungsplatte 41. Die Lagerung 24 stützt den Schwenkboden 14 auf den eingeklappten Ständern der Aufnahmevorrichtung 20 ab. Die Lagerungsplatte 41 ist aus einem federnden Material hergestellt und somit in der Lage Lastspitzen, die beispielsweise bei Transportfahrten durch Schlaglöcher im Untergrund verursacht werden, auszugleichen. Selbstverständlich sind auch andere Dämpfungen möglich, beispielsweise indem ein elastisches Dämpfungselement in Form eines Kunststoffkissens unmittelbar unter dem Schwenkboden 13 angebracht wird.

Die Figuren 8 bis 10 zeigen das Transportgestell 200 unabhängig vom Innenlader 100. Die Basisteile 17 der Ständer 16 sind im dargestellten Ausführungsbeispiel durch waagerechte Streben 42 miteinander verbunden. Die waagerechten Streben 42 verleihen dem Gestell zusätzliche Stabilität. Sie sind vorzugsweise mit den Basisteilen 17 verschweißt. Der Transportboden 13 weist an seinen Längsseiten ein winkelförmiges Profil auf, welches kompatibel zu einer an den U-Schenkeln 11, 11' des Fahrzeugrahmens 10 vorgesehen Aufnahme ist.

Die Figuren 11 und 12 zeigen einen Teilbereich des Ständers 16, nämlich deren aus zwei Segmenten 19 bestehendes Oberteil 18. Die Segmente 19 sind mittels des Scharniers 30 aneinander gekoppelt. An der dem Scharnier 30 gegenüberliegenden Seite des Oberteils 18 ist ein Einstellelement 37 vorgesehen. Bei dem Einstellmittel 37 kann es sich beispielsweise um eine Schraube handeln, gegen deren Kopfbereich sich das obere Segment 19 abstützt. In Abhängigkeit von der Einschraubtiefe ist somit die Position der beiden Segmente 19 zueinander einstellbar. Insbesondere ist es möglich, die Position so zu justieren, dass eine plane Anlageebene 22 für die Ladung 15 geschaffen wird.

Die Figuren 13 und 14 zeigen einen zusätzlichen Verriegelungselement 38, bei dem es sich um einen einstellbaren Spannhaken handelt.

Sowohl das Einstellelement 37 und/oder das Verriegelungselement 38 können bei Bedarf grundsätzlich an allen Scharnierverbindungen der Transportgestellen 200 und 300 angebracht werden. Dem Fachmann sind die hierzu gegebenenfalls erforderlichen Anpassungsmaßnahmen an den jeweiligen Einsatzort geläufig.

Die Figuren 15 bis 17 zeigen den Innenlader 100 mit dem Transportgestell 300. Die Oberteile 18 der Ständer 16 sind um eine bezogen auf die Ständer 16 schräge Drehachse 36 von der Arbeitsposition P1 in die Ruheposition P2 klappbar und umgekehrt. Analog zu dem in Figur 7 dargestellten Ausführungsbeispiel zeigt Figur 17 eine Lagerung 24 mittels derer der Schwenkboden 14 sich auf dem in Ruheposition P2 eingeklappten Transportgestell 300 abstützt.

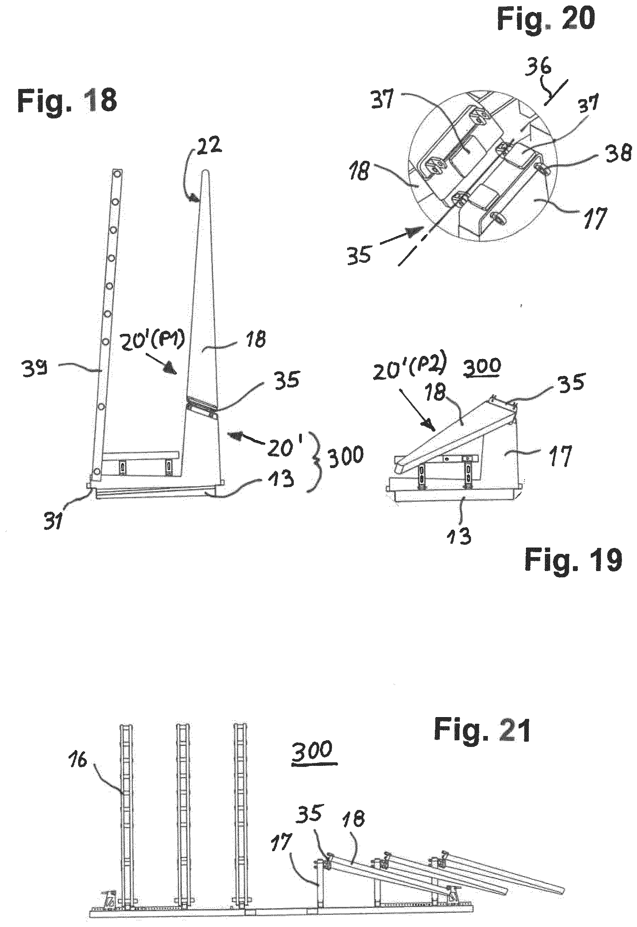

Die Figuren 18 bis 21 zeigen das Transportgestell 300 unabhängig vom Innenlader 100. Figur 18 zeigt das Transportgestell 300 mit in Arbeitsposition P1 aufgerichteten Ständern 16. Optional können demontierbare Stützen 39 zur zusätzlichen Ladungssicherung und als Führungen für Zurrgurte 40 vorgesehen sein. Der Transportboden weist, wie auch alle anderen Ausführungsbeispiele, einen äußeren Rand 31 mit einem zur Aufnahme am Fahrzeugrahmen 10 kompatiblen Profil auf.

Figur 20 zeigt das Scharnier 35 im Detail. Am Scharnier 35 können Einstellelemente 37 und/oder Verriegelungselemente 38 vorgesehen sein.

**Bezugszeichenliste:**

| | | | |
|---|---|---|---|
| 10 | Fahrzeugrahmen | 34 | Schwenkachse (von 30) |
| 11, 11' | U-Schenkel | 35 | Schräg-Scharnier |
| 12 | Einzelradschwinge | 36 | Schwenkachse (von 35) |
| 13 | Transportboden | 37 | Einstellelement |
| 14 | Schwenkboden | 38 | Verriegelungselement |
| 15 | Ladung, z.B. Glaspaket (Fig.5) | 39 | Stütze |
| 16 | Ständer | 40 | Zurrgurt |
| 17 | Basisteil | 41 | Lagerungsplatte |
| 18 | Oberteil | 42 | Strebe |
| 19 | Segment | | |
| 20; 20' | Aufnahmevorrichtung | | |
| 21 | - | 100 | Innenlader |
| 22 | Anlageebene | 200 | Transportgestell |
| 23 | Unterseite (von 14) | 300 | Transportgestell |
| 24 | Lagerung | | |
| 25 | Scharnier | E | Ebene |
| 26 | Schwenkachse (von 24) | P1 | Arbeitsposition |
| 27 | Ladefläche | P2 | Ruheposition |
| 28 | Rad | R | Richtung |
| 29 | Hecktür | RQ | Querrichtung |
| 30 | Scharnier (für 19) | RS | Schrägrichtung |
| 31 | Rand (von 13) | | |
| 32 | Laderaum | | |
| 33 | Drehachse | | |

## Patentansprüche

1. Als Innenlader (100) ausgebildeter Sattelauflieger, umfassend:
- einen in Fahrzeug-Längsrichtung (R) gerichteten, U-förmigen Fahrzeugrahmen (10), an dessen U-Schenkel (11, 11') Räder (28) in Einzelradschwingen (12) angeordnet sind,
- einen Schwenkboden (14) mit einer Ladefläche (27) zur Ausbildung einer Ladeebene (E),
- wenigstens ein an den Fahrzeugrahmen (10) koppelbares Transportgestell (300) umfassend einen Transportboden (13) und eine Aufnahmevorrichtung (20; 20') für eine Ladung (15),
- wobei die Aufnahmevorrichtung (20; 20') wenigstens zwei Ständer (16) umfasst und wobei die Ständer (16) jeweils ein Basisteil (17) und ein Oberteil (18) umfassen sowie ein dazwischen angeordnetes Scharnier (35) und in einer Arbeitsposition (P1) gemeinsame eine Anlageebene (22) für die Ladung (15) bilden,
- und wobei die Scharniere (35) ein Schwenken des Oberteils (18) gegenüber dem Basisteil (17) in eine Ruheposition (P2) ermöglichen, so dass die Aufnahmevorrichtung (20; 20') insgesamt in einem unterhalb der Ladefläche (27) angeordneten Laderaum (32) aufnehmbar ist,
**dadurch gekennzeichnet, dass** die Scharniere (35) Schwenkachsen (36) aufweisen, die so angeordnet sind, dass das Oberteil (18) des Ständers (16) gegenüber dem Basisteil (17) in Schrägrichtung (RS) schwenkbar ist.

2. Als Innenlader (100) ausgebildeter Sattelauflieger (100) nach Anspruche 1, **dadurch gekennzeichnet, dass** die Ständer (16) in Ruheposition (P2) die Unterseite (23) des Schwenkbodens (14) direkt oder indirekt kontaktieren, so dass die eingeklappten Ständer (16) eine Lagerung (24) für den Schwenkboden (14) ausbilden.

3. Als Innenlader (100) ausgebildeter Sattelauflieger (100) nach Anspruch 2, **dadurch gekennzeichnet, dass** die Lagerung (24) ein Dämpfungselement umfasst, welches bei in Ruheposition (R2) befindlichem Ständer (16) zwischen Schwenkboden (14) und Ständer (16) angeordnet ist, so dass bei Transportfahrten entstehende stoßartige Lastspitzen abgefedert werden.

4. Als Innenlader (100) ausgebildeter Sattelauflieger (100) nach einem der Ansprüche 1 bis 3, **dadurch gekennzeichnet, dass** das Oberteil (18) des Ständers (16) wenigstens zwei schwenkbare Segmente (19) umfasst, die durch ein Scharnier (30) verbunden sind.

5. Als Innenlader (100) ausgebildeter Sattelauflieger (100) nach einem der Ansprüche 1 bis 4, **dadurch gekennzeichnet, dass** am Ständer (16) ein Einstellelement (37) vorgesehen ist, mittels dessen Basisteil (17) und Oberteil (18) und/oder die Segmente (19) zueinander ausrichtbar sind, so dass eine durch Basisteil (17) und Oberteil (18) und/oder die Segmente (19) gebildete Anlagefläche (22) planeben ausrichtbar ist.

6. Als Innenlader (100) ausgebildeter Sattelauflieger (100) nach einem der Ansprüche 1 bis 5, **dadurch gekennzeichnet, dass** die Ständer (16) Verriegelungselemente (38) umfassen, mittels welcher die Position der von Basisteil (17) zu Oberteil (18) und/oder die Position von Segmenten (19) zueinander fixierbar ist.

7. Als Innenlader (100) ausgebildeter Sattelauflieger (100) nach einem der Ansprüche 1 bis 6, **dadurch gekennzeichnet, dass** das Transportgestell (300) im in Ruheposition (P2) eingeklappten Zustand in Draufsicht gesehen die Außenkontur des Transportbodens (13) nicht überragt.

8. Als Innenlader (100) ausgebildeter Sattelauflieger (100) nach einem der Ansprüche 1 bis 7, **dadurch gekennzeichnet, dass** das Transportgestell (300) optional horizontale Anlagen zur zusätzlichen Befestigung der Ladung umfasst.

9. Als Innenlader (100) ausgebildeter Sattelauflieger (100) nach einem der Ansprüche 1 bis 8, **dadurch gekennzeichnet, dass** der Innenlader (100) wenigstens zwei Transportgestelle (300) umfasst.

10. Transportgestell (300) für einen Innenlader (100) umfassend einen Transportboden (13) und wenigstens zwei Ständer (16) mit jeweils einem Basisteil (17) sowie einem mit dem Basisteil über ein Scharnier (35) verbundenem Oberteil (18), **dadurch gekennzeichnet, dass** die Scharniere (35) Schwenkachsen (36) aufweisen, die so angeordnet sind, dass das Oberteil (18) des Ständers (16) gegenüber dem Basisteil (17) in Schrägrichtung (RS) schwenkbar ist.

## Claims

1. A semi-trailer designed as an inloader (100), comprising:
- a U-shaped vehicle frame (10) oriented in the vehicle longitudinal direction (R), on whose U-legs (11, 11') wheels (28) are arranged in individual wheel links (12),
- a pivot base (14) with a loading surface (27) for forming a loading plane (E),
- at least one transport rack (300) which can be coupled to the vehicle frame (10) and which comprises a transport base (13) and a receiving device (20; 20') for a load (15),
- wherein the receiving device (20; 20') comprises at least two stands (16) and wherein the stands (16) each comprise a base part (17) and an upper part (18) as well as a hinge (35) arranged therebetween and in a working position (P1) together form a bearing surface (22) for the load (15),
- and wherein the hinges (35) enable the upper part (18) to be pivoted relative to the base part (17) into a rest position (P2), so that the receiving device (20; 20') as a whole can be accommodated in a loading space (32) arranged below the loading surface (27),
**characterized in that** the hinges (35) have pivot axes (36) which are arranged such that the upper part (18) of the stand (16) can be pivoted in the oblique direction (RS) relative to the base part (17).

2. The semi-trailer (100) designed as an inloader (100) as claimed in claim 1, **characterized in that in that**, in the rest position (P2), the stands (16) make direct or indirect contact with the underside (23) of the pivot base (14), so that the folded-in stands (16) form a bearing (24) for the pivot base (14).

3. The semi-trailer (100) designed as an inloader (100) as claimed in claim 2, **characterized in that in that** the bearing (24) comprises a damping element which, when the stand (16) is in rest position (R2), is arranged between pivot base (14) and stand (16), so that shock-like load peaks occurring during transport are cushioned.

4. The semi-trailer (100) designed as an inloader (100) as claimed in one of the claims 1 to 3, **characterized in that** the upper part (18) of the stand (16) comprises at least two pivotable segments (19) which are connected by a hinge (30).

5. The semi-trailer (100) designed as an inloader (100) as claimed in one of the claims 1 to 4, **characterized in that** that an adjusting element (37) is provided on the stand (16), by means of whose base part (17) and upper part (18) and/or the segments (19) can be aligned with respect to one another, so that a bearing surface (22) formed by base part (17) and upper part (18) and/or the segments (19) can be aligned in a planar manner.

6. The semi-trailer (100) designed as an inloader (100) as claimed in one of the claims 1 to 5, **characterized in that** the stands (16) comprise locking elements (38) by means of which the position of the base part (17) to the upper part (18) and/or the position of segments (19) relative to each other can be fixed.

7. The semi-trailer (100) designed as an inloader (100) as claimed in one of the claims 1 to 6, **characterized in that** the transport rack (300), when folded in the rest position (P2), does not project beyond the outer contour of the transport base (13) when viewed from above.

8. The semi-trailer (100) designed as an inloader (100) as claimed in one of the claims 1 to 7, **characterized in that** the transport rack (300) optionally comprises horizontal fittings for additional fastening of the load.

9. The semi-trailer (100) designed as an inloader (100) as claimed in one of the claims 1 to 8, **characterized in that** the inloader (100) comprises at least two transport racks (300).

10. A transport rack (300) for an internal loader (100) comprising a transport base (13) and at least two stands (16), each with a base part (17) and an upper part (18) connected to the base part by a hinge (35), **characterized in that** the hinges (35) have pivot axes (36) which are arranged so that the upper part (18) of the stand (16) can be pivoted relative to the base part (17) in an oblique direction (RS).

## Revendications

1. Semi-remorque conçue comme inloader (100), comprenant :
- un châssis de véhicule en forme de U (10) orienté dans la direction longitudinale du véhicule sur les branches en U (11, 11') duquel des roues (28) sont disposées dans des suspensions de roue indépendantes (12),
- un plancher pivotant (14) avec une surface de chargement (27) permettant de former un niveau de chargement (E),
- au moins un rack de transport (300) pouvant être couplé au châssis du véhicule (10) et comprenant un plancher de transport (13) et un dispositif de réception (20 ; 20') pour un chargement (15),
- sachant que le dispositif de réception (20 ; 20') comprend au moins deux montants (16) et que les montants (16) comprennent chacun une partie de base (17) et une partie supérieure (18) ainsi qu'une charnière (35) disposée entre les deux et qu'en position de travail (P1), elles forment un plan d'appui commun (22) pour le chargement (15),
- et sachant que les charnières (35) permettent de faire pivoter la partie supérieure (18) par rapport à la partie de base (17) dans une position de repos (P2), de sorte que le dispositif de réception (20 ; 20') peut être logé dans son ensemble dans une cale (32) disposée sous la surface de chargement (27),
**caractérisée par le fait que** les charnières (35) présentent des axes de pivotement (36) disposés de telle sorte que la partie supérieure (18) du montant (16) peut être pivotée dans une direction oblique (RS) par rapport à la partie de base (17).

2. Semi-remorque (100) conçue comme inloader (100) selon la revendication 1, **caractérisée par le fait que** les montants (16) en position de repos (P2) sont en contact direct ou indirect avec la face inférieure (23) du plancher pivotant (14), de sorte que les montants repliés (16) forment un palier (24) pour le plancher pivotant (14).

3. Semi-remorque (100) conçue comme inloader (100) selon la revendication 2, **caractérisée par le fait que** le palier (24) comprend un élément d'amortissement qui, lorsque le montant (16) est en position de repos (R2), est disposé entre le plancher pivotant (14) et le montant (16), de sorte que les pics de charge par à-coup se produisant pendant les trajets de transport sont amortis.

4. Semi-remorque (100) conçue comme inloader (100) selon l'une des revendications 1 à 3, **caractérisée par le fait que** la partie supérieure (18) du montant (16) comprend au moins deux segments pivotants (19) reliés par une charnière (30).

5. Semi-remorque (100) conçue comme inloader (100) selon l'une des revendications 1 à 4, **caractérisée par le fait qu'**un élément de réglage (37) est prévu sur le montant (16), au moyen duquel la partie de base (17) et la partie supérieure (18) et/ou les segments (19) peuvent être alignés les uns par rapport aux autres, de sorte qu'une surface d'appui (22) formée par la partie de base (17) et la partie supérieure (18) et/ou les segments (19) peut être alignée de manière plane.

6. Semi-remorque (100) conçue comme inloader (100) selon l'une des revendications 1 à 5, **caractérisée par le fait que** les montants (16) comportent des éléments de verrouillage (38) au moyen desquels la position de la partie de base (17) par rapport à la partie supérieure (18) et/ou la position des segments (19) les uns par rapport aux autres peut être fixée.

7. Semi-remorque (100) conçue comme inloader (100) selon l'une des revendications 1 à 6, **caractérisée par le fait que** le rack de transport (300) à l'état replié en position de repos (P2) ne dépasse pas le contour extérieur du plancher de transport (13) lorsqu'il est vu en plan.

8. Semi-remorque (100) conçue comme inloader (100) selon l'une des revendications 1 à 7, **caractérisée par le fait que** le rack de transport (300) comprend éventuellement des installations horizontales pour la fixation supplémentaire de la charge.

9. Semi-remorque (100) conçue comme inloader (100) selon l'une des revendications 1 à 8, **caractérisée par le fait que** l'inloader (100) comporte au moins deux racks de transport (300).

10. Rack de transport (300) pour un inloader (100) comprenant un plancher de transport (13) et au moins deux montants (16) avec chacun une partie de base (17) et une partie supérieure (18) reliée à la partie de base par une charnière (35), **caractérisé par le fait que** les charnières (35) présentent des axes de pivotement (36) qui sont disposés de telle manière que la partie supérieure (18) du montant (16) peut pivoter par rapport à la partie de base (17) dans une direction inclinée (RS).
